# FASCICULE DE BREVET EUROPEEN

(11) **EP 1 733 867 B1**
(45) Date de publication et mention de la délivrance du brevet: **23.01.2008**
(21) Numéro de dépôt: 06114936.5
(22) Date de dépôt: 02.06.2006
(51) Int. Cl.: B29C 70/38, B29D 30/38

(54) **Dispositif de pose de fil de renforcement**
Vorrichtung zum Auflegen von Verstärkungskord
Device for depositing reinforcement cord

(30) Priorité: 17.06.2005 FR 0506246
(43) Date de publication de la demande: 20.12.2006
(73) Titulaire: Société de Technologie Michelin, 63000 Clermont-Ferrand (FR); Michelin Recherche et Technique S.A., 1763 Granges-Paccot (CH)
(72) Inventeur: Cordaillat, Dominique, 69126 Brindas (FR); Souche, Jean-Louis, 69440 Taluyers (FR)
(74) Mandataire: Lasson, Cédric Y. M.

(56) Documents cités:
- EP-A- 1 279 486
- US-A- 4 062 716
- US-A- 4 279 683
- US-A- 5 281 289
- PATENT ABSTRACTS OF JAPAN vol. 2003, no. 12, 5 décembre 2003 (2003-12-05) & JP 2005 246845 A (BRIDGESTONE CORP), 15 septembre 2005 (2005-09-15)

## Description

L'invention concerne la fabrication des pneumatiques destinés à équiper les véhicules. De manière générale, cette fabrication s'effectue en déposant sur une forme de référence les différents composants formant le pneumatique. Ces composants ou semi-finis sont réalisés à partir de profilés en caoutchouc ou à partir de renforts délivrés à partir de dispositifs de pose spécialisés en fonction de la nature du composant. Plus précisément, l'invention se rapporte au dispositif de fabrication des armatures de renforcement de la ceinture sommet des pneumatiques. Ces renforcements sont constitués de fils ou de tronçons de fils, parallèles entre eux, et disposés dans le sommet du pneumatique, sous la bande de roulement.

La fabrication de tels renforcements se fait de façon classique en réalisant des nappes à angle, dans lesquelles les fils de renforcement forment un angle donné avec la direction longitudinale de la nappe, et préparés à plat sous forme de produits semi-finis que l'on dépose par enroulement sur une forme de référence lors de l'assemblage du pneumatique. La forme de référence est généralement montée sur un bâti comportant des moyens permettant sa mise en rotation.

Une autre façon de faire, consiste à déposer des fils ou des tronçons de fils directement à leur place définitive sur la forme de pose ou l'ébauche de pneumatique. Des appareils permettant ce type de fabrication sont décrits à titre d'exemple non limitatif dans les publications EP 0 519 295, EP 580 055, EP 1231049, ou encore EP 1 426 170 décrivant des appareils de pose dans lesquels le fil de renforcement est déposé par un guide fil porté par un bras de pose rotatif ou oscillant et plaqué en position sur la forme de pose par des applicateurs, ou bien dans les publications EP 0 248 301, EP 0 845 348 ou EP 0 845 349 décrivant des appareils de pose dans lesquels les fils de renforcement sont projetés individuellement sur l'élément définissant la géométrie du renforcement ; Un guide fil peut permettre d'ajuster la trajectoire finale du tronçon de fil de manière à améliorer la reproductibilité et la précision de pose.

L'invention s'intéresse en particulier à des appareils de pose tels que ceux décrits ci-dessus.

Ces appareils comprennent des moyens d'appel du fil à partir d'une source telle qu'une bobine, et ont en commun le fait que le fil ou les tronçons de fils sont mis en mouvement dans l'espace dans un plan de pose dont l'intersection avec la forme de pose ou l'ébauche de pneumatique forme une trace dont une partie se confond avec le fil ou le tronçon une fois posé.

Le terme fil doit être entendu dans un sens tout à fait général et comprend les fils se présentant sous la forme de mono filaments, de multi filaments, d'un câble, d'un retors ou d'un assemblage équivalent, et ceci, quelle que soit la matière constituant le fil ou le traitement de surface pour favoriser sa liaison avec le caoutchouc ou pour permettre son adhésion directe sur le support lors de sa projection.

De manière à réaliser un positionnement des fils, ou des tronçons de fils, en conformité avec l'architecture du pneumatique, il convient de les déposer sur l'ébauche de pneumatique selon une position (généralement centrée par rapport à l'équateur du tore formé par l'ébauche de pneumatique), et avec un angle donné par rapport à la direction longitudinale.

La direction du fil, une fois posé, fait un angle α donné avec la direction circonférentielle du pneumatique. Cet angle α peut varier de 0 à 90°. Toutefois, dans le cas particulier des renforcements sommet, l'angle α est compris entre 15° et 40°. Aussi, l'appareil de pose des tronçons de fils du type de ceux décrits ci dessus, doit être aligné d'une part avec le centre de l'ébauche de pneumatique placée sur la forme de référence, et d'autre part orienté de manière précise par rapport à la direction circonférentielle, de manière à déposer les fils ou les tronçons de fils selon l'angle α désiré et à la position prescrite.

A cet effet, l'appareil de pose des tronçons de fils est monté sur un bâti par l'intermédiaire d'un système articulé apte, à des fins de réglage, à faire effectuer à l'appareil de pose des fils ou des tronçons de fils une rotation d'un angle α donné autour d'un axe virtuel ZZ'. Le bâti supportant l'appareil de pose est aligné géométriquement avec le bâti supportant la forme de référence.

L'axe ZZ', autour duquel on fait tourner l'appareil de pose, est généralement compris dans le plan équatorial de l'ébauche de pneumatique ou de la forme lui servant de référence et coupe perpendiculairement l'axe virtuel de rotation XX' de la forme de référence en un point donné. Le plan équatorial E se définit comme étant le plan passant par le centre axial de l'ébauche ou de la forme lui servant de référence et étant perpendiculaire à l'axe de rotation XX' de l'ébauche ou de la forme de référence. En règle générale, lorsque l'on observe une coupe radiale d'une ébauche de pneumatique ou de la forme, le point le plus éloigné de l'axe de rotation, et situé sur la surface de l'ébauche de pneumatique ou de la forme XX', appartient au plan équatorial.

Si ce mode d'agencement du dispositif de pose des fils de renforcement donne satisfaction en raison de son faible encombrement et de sa grande simplicité d'intégration avec les autres dispositifs de pose, il demeure néanmoins difficile à régler et à maintenir dans une position donnée avec la précision requise pour la dépose du fil ou des tronçons de fils.

On observe en effet que la présence des articulations et des bras, nécessaires pour commander le mouvement de rotation de l'appareil de pose autour de l'axe ZZ', entraîne un cumul des jeux mécaniques à l'origine de quelques imprécisions de positionnement du fil dans l'espace, pouvant conduire à une variation de la position angulaire des fils ou des tronçons de fils de l'ordre de quelques degrés. Ces imprécisions sont incompatible avec la précision et la fiabilité industrielle recherchée pour la réalisation des pneumatiques de haute performance. Cette imprécision peut également être aggravée en raison de la forte sollicitation mécanique engendrée par la rotation rapide des organes de l'appareil de pose du fil ou des tronçons de fils, et qui se transmettent au bâti supportant l'appareil de pose par l'intermédiaire des bras de commande et des articulations.

L'invention a pour objet de proposer une architecture de machine offrant une précision de positionnement angulaire améliorée, tout en conservant la simplicité d'intégration de ce nouveau dispositif avec les autres dispositifs d'alimentation en composants et en produits semi-finis.

L'objet de l'invention est résolu par les caractéristiques de la revendication 1. Des modes particuliers de réalisation préférés de l'invention sont décrits dans les revendications dépendantes.

Le dispositif de pose du fil ou des tronçons de fil conforme à l'invention comprend un premier bâti comportant un arbre motorisé d'axe XX', ledit arbre motorisé supporte la forme de référence destinée à recevoir l'ébauche du pneumatique. Ce premier bâti est monté réglable par rotation autour d'un axe ZZ' sur un second bâti de telle manière que l'axe ZZ' appartienne au plan équatorial E de la forme de référence et soit sécant perpendiculairement à l'axe XX'. L'appareil de pose du fil ou des tronçons de fils est monté sur un troisième bâti, positionné de manière fixe par rapport au second bâti. On dispose l'appareil de pose de manière à ce que le plan de pose des fils comprenne l'axe ZZ'.

Dans cette configuration, en faisant subir au premier bâti supportant la forme de référence de l'ébauche une rotation d'un angle α donné par rapport au troisième bâti supportant l'appareil de pose des tronçons de fils, on détermine l'angle de pose des tronçons de fils sur ladite ébauche de pneumatique.

Ainsi, en rendant la position de l'appareil de pose du fil fixe par rapport au second bâti, on s'affranchit des inconvénients liés aux moyens nécessaires à son orientation et il est possible d'obtenir une précision de pose des fils bien supérieure à celle obtenue en mettant en oeuvre les moyens connus.

Il apparaît que la forme de réalisation la plus simple consiste à positionner l'axe de rotation de la forme horizontalement et l'axe virtuel de rotation ZZ' verticalement.

La description qui suit se fera sur la base d'un exemple non limitatif de réalisation de l'invention en s'appuyant sur les figures 1 à 6 dans lesquelles,
- les figure 1 et 2 représentent des vues en perspective schématiques d'un dispositif de pose de fils de renforcement selon l'art antérieur,
- la figure 3 représente une vue de dessus schématique du dispositif représenté dans les figures 1 et 2,
- les figures 4 et 5 représentent des vues en perspective schématiques d'un dispositif de pose des fils de renforcement conforme à l'invention,
- la figure 6 représente une vue de dessus schématique du dispositif représenté dans les figures 4 et 5.

Les éléments de même nature illustrés sur chacune des figures ci-dessus portent des numéros de référence identiques. Les dessins s'appuient, de manière non limitative, sur un appareil de pose tel que décrit dans les brevets EP 0 248 301, EP 0 845 348 et EP 0 845 349 et dans lesquels le fil est projeté sur la surface de réception constituée par l'ébauche de pneumatique.

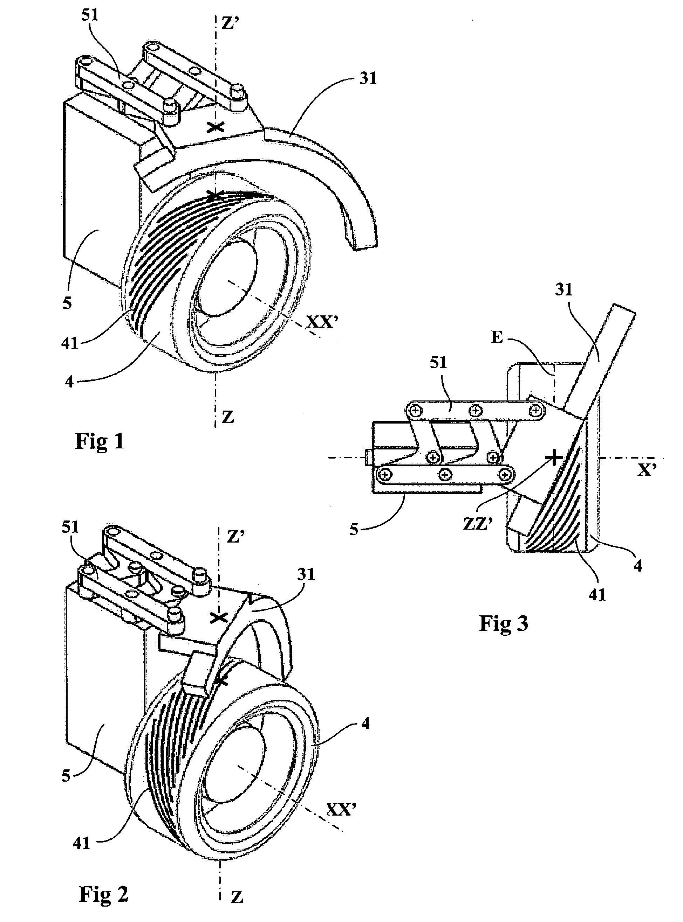

Les figures 1, 2 et 3 représentent une forme de réalisation, connue de l'art antérieur, dans lequel un bâti 5, généralement fixe, comporte un arbre motorisé d'axe XX' supportant la forme de référence sur laquelle repose l'ébauche de pneumatique 4. L'appareil de pose des fils 31, représenté de façon schématisée, est relié au bâti 5 par un ensemble 51 de biellettes reliées par des articulations permettant d'assurer la rotation de l'appareil de pose 31 autour d'un axe virtuel ZZ'. L'axe ZZ' passe par le centre de rotation de l'appareil de pose 31 et coupe l'axe de rotation XX' de l'arbre portant la forme de référence sur laquelle repose l'ébauche de pneumatique 4. Cet axe ZZ' est également compris dans le plan équatorial, dont l'intersection avec la surface externe de l'ébauche 4 a la forme d'une circonférence dont la trace est matérialisée sous la référence E.

Après la pose d'un fil, l'ébauche du pneumatique effectue une rotation d'un pas donné autour de son axe de rotation XX', avant la pose du tronçon de fil de renforcement suivant.

L'angle α de pose des fils de renforcement 41 est donné par la rotation autour de l'axe XX' de l'appareil de pose 31 sous l'action des biellettes 51. Le nombre important de points de rotation de ce système articulé, fortement sollicités par les vibrations mécaniques liées au fonctionnement de l'appareil de pose des fils de renforcement 31, conduit à une imprécision de pose des tronçons de fils non compatible avec les exigences requises.

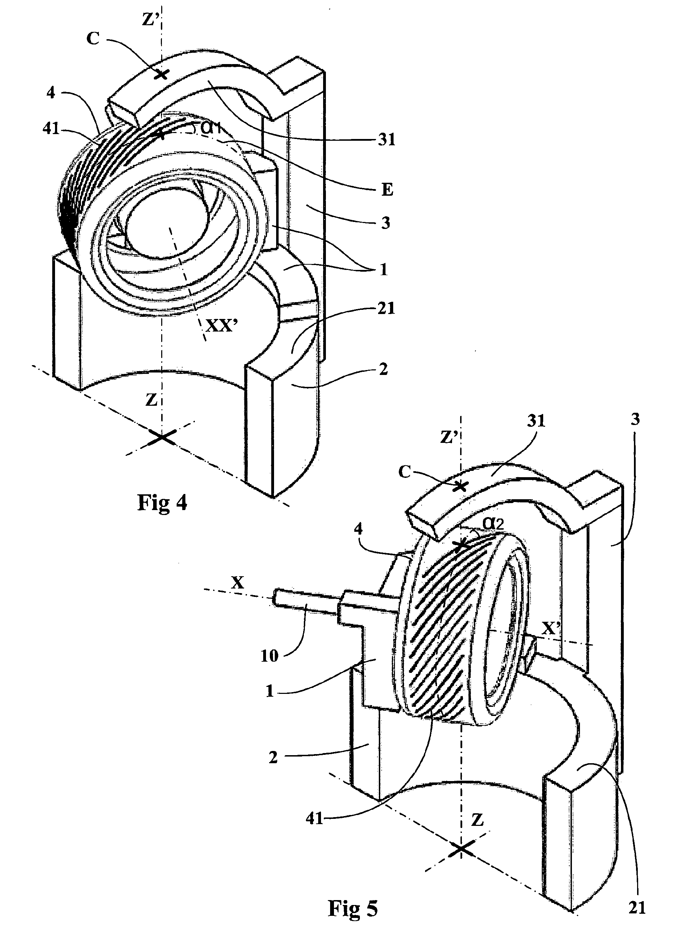

Le dispositif de pose conforme à l'invention, tel qu'illustré sur les figures 4, 5 et 6, est formé d'un premier bâti 1, comportant un arbre motorisé 10 tournant autour d'un axe XX'. La forme de référence (non visible) supportant l'ébauche de pneumatique 4 est montée sur l'arbre 10. Le plan équatorial est matérialisé par la trace E de son intersection avec la surface externe de l'ébauche de pneumatique 4. L'axe ZZ' est disposé dans le plan équatorial du pneumatique et coupe perpendiculairement l'axe XX' en un point de l'espace.

Le deuxième bâti 2 comporte un chemin de guidage 21, disposé dans un plan horizontal perpendiculaire audit axe ZZ', et sur lequel circule le premier bâti 1. On s'arrange pour que l'axe ZZ' passe par le centre de la portion de cercle formée par le chemin de guidage 21. De cette façon, en faisant circuler le bâti 1 sur le chemin de guidage 21, il est possible de changer l'angle α formé par le plan équatorial de l'ébauche de pneumatique avec un plan de référence vertical passant par l'axe XX'. La liaison du premier bâti 1 avec le second bâti 2 peut se faire par un rail de guidage ou tout autre type de liaison apte à guider le premier bâti le long du chemin de guidage 21.

Un troisième bâti 3 est rendu solidaire du second bâti 2. Ce troisième bâti supporte l'appareil de pose des fils de renforcement 31. Cet agencement permet donc de rendre fixe l'appareil de pose 31 par rapport au second bâti 2.

Pour des commodités de réglage du dispositif, et comme cela a déjà été évoqué, l'axe ZZ' est placé dans la direction verticale, et l'axe XX' dans la direction horizontale. Ainsi le plan équatorial E et le plan de pose sont chacun des plans verticaux faisant entre eux un angle α.

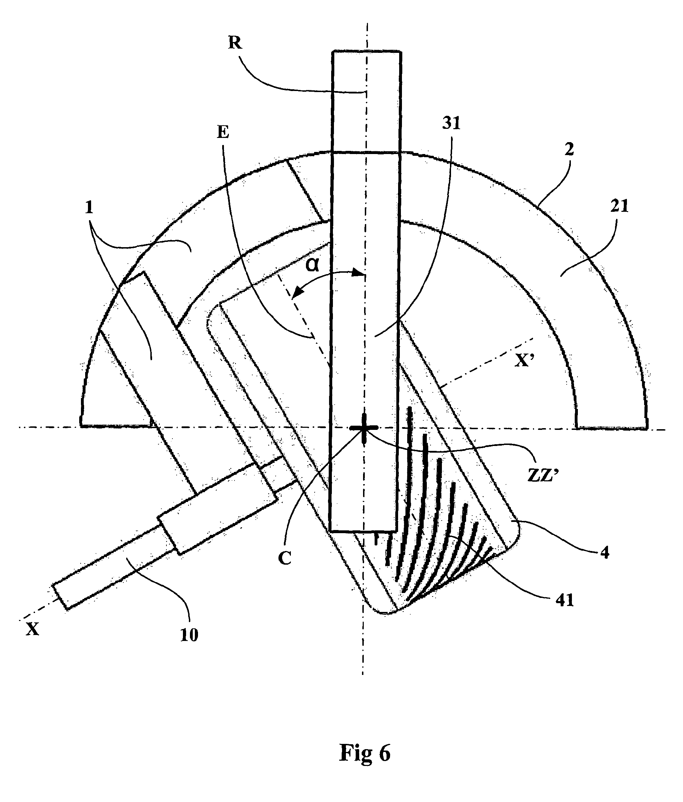

Le plan de référence R du réglage de l'angle de pose α formé par les fils de renforcement une fois posés avec la direction circonférentielle du pneumatique, peut être déterminé en choisissant un plan vertical R passant par l'axe ZZ' et par le centre C de l'appareil de pose 31 (voir figure 6)

Ainsi pour que l'angle α soit égal à la valeur prescrite, il suffit de déplacer le premier bâti 1 sur le chemin de guidage de manière à ce que le plan équatorial de l'ébauche du pneumatique forme avec le plan de référence du réglage R, un angle égal à l'angle α. Les figures 4 et 5 représentent les positionnements du premier bâti selon que l'on désire déposer les fils de renforcement selon un angle α1 ou α2.

Le mode de réalisation de ce dispositif intégrant un appareil 31 de pose de fils du type de ceux décrits de manière non limitative dans les publications citées en référence dans la partie introductive de la présente description, procure l'avantage de s'affranchir de tous les éléments de guidage mobiles nécessaires au positionnement de l'appareil de pose par rapport à l'ébauche de pneumatique, dés lors que ce positionnement est assuré par le déplacement du premier bâti 1 par rapport à l'appareil de pose 31 qui demeure fixe.

Les sollicitations mécaniques subies par le premier bâti 1 sont relativement faibles, et peu susceptibles d'en altérer la qualité de positionnement. De cette manière, il est beaucoup plus aisé de maîtriser le positionnement de l'appareil de pose des fils de renforcement et de mettre sous contrôle avec la précision requise le déplacement des fils de renforcement dans l'espace.

D'autres formes de réalisation (non représentées) permettent de réaliser un dispositif conforme à l'invention et donnant des résultats équivalents. Ainsi il est tout à fait possible de faire reposer le premier bâti 1 sur le second bâti 2 par l'intermédiaire d'un arbre rotatif dont l'axe se confond avec l'axe ZZ'.

Par ailleurs l'agencement du dispositif de pose des fils de renforcement dans un ensemble plus vaste comprenant les autres dispositifs délivrant les autres composants du pneumatique peut être réalisé de plusieurs manières. Un premier agencement consiste à amener les dispositifs de pose des différents composants au voisinage de l'ébauche dont le bâti demeure fixe par rapport à ces autres dispositifs, ce qui revient en l'espèce à rendre fixe le second bâti 2.

Une autre forme d'agencement consiste à déplacer l'ébauche en cours de réalisation au droit de chacun des dispositifs de pose ce qui revient, dans ce cas, à rendre le second bâti 2 mobile dans une ou plusieurs directions données.

## Revendications

1. Dispositif de pose des fils de renforcement (41) d'un pneumatique, **caractérisé en ce qu'**il est formé
- d'un premier bâti (1) comportant un arbre motorisé (10) d'axe XX', ledit arbre motorisé (10) supportant une forme de référence rotative destinée à recevoir l'ébauche (4) dudit pneumatique,
- d'un second bati (2) sur lequel ledit premier bâti (1) est monté réglable par rotation d'un angle α donné autour d'un axe ZZ', de telle manière que l'axe ZZ' appartienne au plan équatorial (E) de la forme de référence et soit sécant perpendiculairement à l'axe XX', et
- d'un troisième bâti (3), fixe par rapport au second bâti (2), ledit troisième bâti (3) supportant un appareil (31) apte à déposer des fils ou des tronçons de fils (41) directement et à leur place définitive sur la surface de réception constituée par l'ébauche (4) dudit pneumatique, et disposé de manière à ce que les fils ou tronçons de fil fassent mouvement vers ladite surface de réception dans un plan de pose comprenant l'axe ZZ'.

2. Dispositif selon la revendication 1 dans lequel, l'axe XX' est horizontal, et dans lequel l'axe ZZ' est vertical.

3. Dispositif selon la revendication 1 dans lequel, la liaison entre le premier bâti (1) et le second bâti (2) est réalisée par un arbre rotatif dont l'axe se confond avec l'axe ZZ'.

4. Dispositif selon la revendication 1 dans lequel, le second bâti (2) comprend un chemin de guidage (21) semi-circulaire, par le centre duquel passe l'axe ZZ', disposé dans un plan sensiblement perpendiculaire à l'axe ZZ', et sur lequel circule le premier bâti (1).

5. Dispositif selon l'une des revendications 1 à 4 dans lequel, l'appareil (31) de pose projette chaque fil ou tronçon de fil individuellement à son emplacement définitif sur l'ébauche de pneumatique.

6. Dispositif selon l'une des revendications 1 à 4 dans lequel l'appareil de pose comporte un guide fil porté par un bras de pose rotatif ou oscillant, et des moyens d'application du fil sur la forme de pose.

7. Dispositif selon l'une des revendications 1 à 6, dans lequel les fils ou tronçons de fils, une fois déposés, sont adjacents et sensiblement parallèles entre eux.

8. Dispositif selon l'une des revendications 1 à 6, dans lequel les fils ou les tronçons de fils, une fois déposés, font un angle α donné avec la direction longitudinale du pneumatique.

## Claims

1. Device for laying the reinforcement cords (41) of a tyre, **characterised in that** it is formed
- of a first frame (1) comprising a motor-driven shaft (10) with an axis XX', the motor-driven shaft (10) supporting a rotary reference form which is intended to receive the blank (4) of the tyre,
- of a second frame (2) on which the first frame (1) is mounted adjustably by rotation by a specified angle α about an axis ZZ', so that the axis ZZ' belongs to the equatorial plane (E) of the reference frame and intersects perpendicularly with the axis XX', and
- of a third frame (3) which is fixed relative to the second frame (2), the third frame (3) supporting an apparatus (31) for laying cords or lengths of cords (41) directly and in their final position on the receiving surface formed by the blank (4) of the tyre, and being disposed in such a manner that the cords or lengths of cord move towards the receiving surface in a laying plane including the axis ZZ'.

2. Device according to claim 1, wherein the axis XX' is horizontal and the axis ZZ' is vertical.

3. Device according to claim 1, wherein the connection between the first frame (1) and the second frame (2) is formed by a rotary shaft whose axis merges with the axis ZZ'.

4. Device according to claim 1, wherein the second frame (2) has a semi-circular guide path (21), through the centre of which the axis ZZ' passes, and which is disposed in a plane substantially perpendicular to the axis ZZ', and on which the first frame (1) circulates.

5. Device according to one of claims 1 to 4, wherein the laying apparatus (31) projects each cord or length of cord individually on to its final position on the tyre blank.

6. Device according to one of claims 1 to 4, wherein the laying apparatus comprises a cord guide supported by a rotary or oscillating laying arm, and means for applying the cord to the laying form.

7. Device according to one of claims 1 to 6, wherein the cords or lengths of cord, once laid, are adjacent and substantially parallel to one another.

8. Device according to one of claims 1 to 6, wherein the cords or lengths of cords, once laid, form a specified angle α with the longitudinal direction of the tyre.

## Patentansprüche

1. Verlegevorrichtung der Verstärkungsdrähte (41) eines Luftreifens, **dadurch gekennzeichnet, dass** sie gebildet wird von
- einem ersten Gestell (1), das eine motorisierte Welle (10) mit einer Achse XX' aufweist, wobei die motorisierte Welle (10) eine drehbare Schablone trägt, die dazu bestimmt ist, den Rohling (4) des Luftreifens aufzunehmen,
- einem zweiten Gestell (2), auf das das erste Gestell (1) durch Drehung um einen gegebenen Winkel α um eine Achse ZZ' einstellbar montiert wird, derart, dass die Achse ZZ' zur Äquatorialebene (E) der Schablone gehört und die Achse XX' lotrecht schneidet, und
- einem dritten Gestell (3), das bezüglich des zweiten Gestells (2) ortsfest ist, wobei das dritte Gestell (3) ein Gerät (31) trägt, das fähig ist, Drähte oder Drahtabschnitte (41) direkt und an ihrem endgültigen Platz auf der Aufnahmefläche aufzubringen, die vom Rohling (4) des Luftreifens gebildet wird, und so angeordnet ist, dass die Drähte oder Drahtabschnitte eine Bewegung zur Aufnahmefläche in einer Verlegeebene ausführen, die die Achse ZZ' enthält.

2. Vorrichtung nach Anspruch 1, bei der die Achse XX' waagrecht und die Achse ZZ' senkrecht ist.

3. Vorrichtung nach Anspruch 1, bei der die Verbindung zwischen dem ersten Gestell (1) und dem zweiten Gestell (2) von einer Drehwelle hergestellt wird, deren Achse mit der Achse ZZ' zusammenfällt .

4. Vorrichtung nach Anspruch 1, bei der das zweite Gestell (2) einen halbkreisförmigen Führungsweg (21) aufweist, durch dessen Mitte die Achse ZZ' verläuft, der in einer Ebene im Wesentlichen lotrecht zur Achse ZZ' angeordnet ist und auf dem das erste Gestell (1) umläuft.

5. Vorrichtung nach einem der Ansprüche 1 bis 4, bei der das Verlegegerät (31) jeden Draht oder Drahtabschnitt einzeln an seine endgültige Stelle auf dem Luftreifenrohling projiziert.

6. Vorrichtung nach einem der Ansprüche 1 bis 4, bei der das Verlegegerät eine Drahtführung, die von einem drehenden oder schwenkenden Verlegearm getragen wird, und Mittel zum Aufbringen des Drahts auf die Verlegeschablone aufweist.

7. Vorrichtung nach einem der Ansprüche 1 bis 6, bei der die Drähte oder Drahtabschnitte, wenn sie aufgebracht sind, einander benachbart und im Wesentlichen parallel zueinander sind.

8. Vorrichtung nach einem der Ansprüche 1 bis 6, bei der die Drähte oder Drahtabschnitte, wenn sie aufgebracht sind, einen gegebenen Winkel α mit der Längsrichtung des Luftreifens bilden.
